## Europäisches Patentamt
## European Patent Office
## Office européen des brevets

(19)

(11) **EP 0 807 139 B1**

(12) **EUROPÄISCHE PATENTSCHRIFT**

(45) Veröffentlichungstag und Bekanntmachung des Hinweises auf die Patenterteilung:
**04.08.1999 Patentblatt 1999/31**

(21) Anmeldenummer: **96900539.6**

(22) Anmeldetag: **23.01.1996**

(51) Int Cl.$^6$: **C08G 65/20**, C08G 65/10

(86) Internationale Anmeldenummer:
**PCT/DE96/00088**

(87) Internationale Veröffentlichungsnummer:
**WO 96/23833 (08.08.1996 Gazette 1996/36)**

(54) **VERFAHREN ZUR HERSTELLUNG VON TETRAHYDROFURANPOLYMEREN**

PROCESS FOR PRODUCING TETRAHYDROFURANE POLYMERS

PROCEDE POUR PRODUIRE DES POLYMERES DE TETRAHYDROFURANE

(84) Benannte Vertragsstaaten:
**DE ES FR GB IT NL**

(30) Priorität: **31.01.1995 DE 19502970**
**21.04.1995 DE 19514826**
**14.06.1995 DE 19521602**

(43) Veröffentlichungstag der Anmeldung:
**19.11.1997 Patentblatt 1997/47**

(73) Patentinhaber: **Müller, Herbert**
**67227 Frankenthal (DE)**

(72) Erfinder: **Müller, Herbert**
**67227 Frankenthal (DE)**

(74) Vertreter: **Weiss, Wolfgang, Dipl.-Chem. Dr. et al**
**Postfach 86 08 20**
**81635 München (DE)**

(56) Entgegenhaltungen:
**EP-A- 0 239 787        EP-A- 0 241 890**
**WO-A-94/05719          US-A- 5 208 385**
**US-A- 5 210 283**

**Beschreibung**

Diese Erfindung betrifft ein Verfahren zur diskontinuierlichen oder kontinuierlichen Herstellung von Tetrahydrofuranpolymeren durch Homopolymerisation von Tetrahydrofuran oder Copolymerisation von Tetrahydrofuran mit 1,2-Alkylenoxiden an durch Säuren aktiviertem und calciniertem Aluminosilicat, bei dem man Homo- und Copolymere mit besonders enger Molekulargewichtsverteilung, einem vernachlässigbar geringen Gehalt an verunreinigenden oligomeren cyclischen Ethern und niedriger Farb- und Säurezahl erhält

Die katalytische Bildung von Tetrahydrofuranpolymeren an Aluminosilikaten ist lange bekannt. In der GB-PS 845 958 wird ein Verfahren zur Copolymerisation von Tetrahydrofuran und Alkylenoxiden beschrieben, bei dem man die Polymerisation in Gegenwart von Verbindungen mit reaktivem Wasserstoff an Bleicherde-Katalysaoren durchführt. Bei diesem Verfahren fallen als Nebenprodukte verhältnismäßig große Mengen niedermolekularer Produkte an die überwiegend aus oligomeren cyclischen Ethern bestehen. Die Molekulargewichtsverteilung der Tetrahydrofuranpolymere ist sehr breit. Sie kann abhängig vom mittleren Molekulargewicht einen Polymolekularitätsindex (polydispersity) Mw/Mn von 3 bis 4 für den Molekulargewichtsbereich von 1000 bis 2000 annehmen (Mw = Gewichtsmolekulargewicht und Mn = Zahlenmittelmolekulargewicht). Die Polymere sind durchweg gelblich gefärbt, sind meist nicht streng bifunktionell und haben eine der Weiterverwendung zu Polyestern und Polyurethanen abträgliche hohe Säurezahl (meist > 0,1 mg KOH/g).

Die Homopolymerisation des Tetrahydrofurans zu Polybutylenglykoldiacetaten beschreibt die Deutsche Auslegeschrift 1226560 mit Montmorillonit-Silicaten als Katalysatoren. Pulverförmige Katalysatoren zeigen sich gekörnten überlegen (s. Spalte 4. Zeile 34-36). Dieses Verfahren liefert aber Produkte die schon wegen der schlechten Farbe vor der Weiterverarbeitung aufwendig gereinigt werden müssen. Diese Problematik wird in der Offenlegungsschrift DE 3935750 beschrieben.

Die oligomeren cyclischen Ether, die sich bei der Homo- und Copolymerisation bilden, sind unerwünschte Verunreinigungen der Polymerisate, da sie inertes Material darstellen und die Qualität der aus polymeren Glykolen hergestellten Endpolymerisate herabsetzen. Zu ihrer Verminderung sind schon verschiedene Vorschläge gemacht worden. So wird z.B. in EP-A-6107 der Vorschlag gemacht, die Copolymerisate bei höherer Temperatur mit einem aktivierten Montmorillonit zu behandeln. In der US-PS 4 127 513 wird der Vorschlag gemacht, als Katalysator einen besonders aktivierten Montmorillonit zu verwenden. Nachteilig sind bei diesem Prozeß die hohe Farbzahl der Polymerisate, eine verhältnismäßig geringe Polymerisationsgeschwindigkeit und ein Anteil an oligomeren cyclischen Ethern, der immer noch bei 5 bis 6 Gew. % liegt. Ein weiterer Verbesserungsvorschlag für die Copolymerisation von Alkylenoxiden mit Tetrahydrofuran unter dem katalytischen Einfluß von aktivierter Bleicherde ist der US-PS 4 228 272 zu entnehmen. Er sieht die Verwendung von Bleicherden mit einem bestimmten spezifischen Porenvolumen, einer definierten Katalysatoroberfläche und einem bestimmten Porendurchmesser vor. Der Oligomerengehalt ist aber mit 4 Gew.% (vgl. Splate 5, Zeile 14 und 15) für die Anwendung der Copolymeren zur Herstellung von Polyurethanen, an die höhere mechanische Ansprüche gestellt werden, noch zu hoch. Bekanntlich liefern alle Verfahren zur Copolymerisation von Alkylenoxiden mit Tetrahydrofuran in Gegenwart von Bleicherden hochmolekulare Copolymere mit endständigen Hydroxylgruppen, die stets durch einen mehr oder weniger hohen Gehalt an macrocyclischen Ethern ohne Hydroxylgruppen verunreinigt sind. Deshalb wurde auch vorgeschlagen die cyclischen Ether durch eine Extraktion mit Kohlenwasserstoffen, Wasser oder überkritischen Gasen (US-Patentschrift 4 500 705, 4251 654 und 4 306 056) zu entfernen.

In der DE-OS 3 346 136 wird ein Verfahren zur Copolymerisation von Alkylenoxiden und Tetrahydrofuran beschrieben, bei dem sich der Anfall an cyclischen oligomeren Ethern dadurch unter 2 Gew. % zurückdrängen läßt, daß man kontinuierlich in einem Reaktor polymerisiert und dem im Kreis geführten Reaktionsgemisch weniger als 30 Gew. % an Frischzulauf aus Tetrahydrofuran und 1,2-Alkylenoxid zuführt. Bei diesem Verfahren ist nachteilig, daß Polymerisate entstehen, die eine breite Molekulargewichtsverteilung aufweisen. So liegt der Polymolekularitätsindex Mw/Mn hier bei über 4.

Aus der EP-A 0 104 609 ist bekannt, daß man Polyoxibutylenoxialkylenglykolcarbonsäurediester mit einem niedrigen Gehalt an oligomeren cyclischen Ethern erhält, wenn man die Copolymerisation von Tetrahydrofuran mit einem 1,2-Alkylenoxid in Gegenwart von Carbonsäureanhydrid und Bleicherde mit einem Wassergehalt von weniger als 3 Gew. % durchführt. Auch bei diesem Verfahren erhält man Copolymerisate mit einer ungenügenden Molekulargewichtsverteilung. Auch die neuerdings bekannt gewordenen Verfahren mit Bleicherden oder amorphen Aluminosilicaten zu polymerisieren sind nicht zufriedenstellend (US-PS 5208 385 und 5210283). Es werden nur sehr uneinheitliche Polymere erhalten, die zudem gefärbt sind und mit Säurezahlen von > 0,1 KOH/g belastet sind.

In dem EP-A-0239787 wird der Vorschlag gemacht, durch diskontinuierliche Coplolymerisation an Bleicherdekatalysatoren in Gegenwart von Telogenen mit reaktiven Wasserstoffatomen und einer konstanten aber niedrigen 1,2-Alkylenoxidkonzentration die Molekulargewichtsverteilung eng zugestalten und die Bildung oligomerer cyclischer Ether herabzusetzen

Trotzdem besteht im Vergleich zu diesen Produkten sowohl bei Homo- als auch bei Copolymeren das Bedürfnis die Molekulargewichtsverteilung unter 1,5 bis 2,8 für Molekulargewichte zwischen 1000 und 2000 auf beispielsweise 1,3 bis 2,2 zu drücken, und den Anfall an oligomeren cyclischen Ethern auf unter 2 Gew. % zu begrenzen. Niedermolekulare Polymere mit durchschnittlichem Molekulargewicht unter 250 sollten nach anzustrebenden Verfahren, wenn überhaupt, zu höchstens 1 Gew. % entstehen. Ein zusätzlicher Reinigungsschritt zur Abtrennung dieser Produkte, der bei den z. Z. ausgeübten Verfahren notwendig ist, könnte dann unterbleiben.

Aufgabe der vorliegenden Erfindung war es also, ein Verfahren zur Herstellung hochwertiger Polymere und Copolymerer aus Tetrahydrofuran und 1,2-Alkylenoxid bereitzustellen, bei dem die Bildung merklicher Mengen oligomerer cyclischer Ether vermieden wird und farblose Polymerisate oder Copolymerisate mit enger Molekulargewichtsverteilung Mw/Mn von 1,3 bis 2,2 für Molekulargewichte zwischen 1000 und 2000 mit niedriger Säurezahl erhalten werden.

Folgt man der Lehre des EP-A-104462, so ist die Bildung cyclischer Ether in erster Linie eine unvermeidbare Nebenreaktion der kationischen "ring-opening polymerization" und vom verwendeten Katalysator weitgehend unabhängig. Daß durch das erfindungsgemäße Verfahren, die Entstehung der cyclischen Ether unterdrückt wird, war also nicht vorhersehbar.

Es wurde gefunden, daß man bei der kontinuierlichen oder diskontinuierlichen Herstellung von Tetrahydrofuranpolymeren durch Polymerisation oder Copolymerisation von Tetrahydrofuran mit 1,2-A1kylenoxid in Gegenwart von Carbonsäureanhydriden oder Verbindungen mit reaktivem wasserstoff, die in Mengen von 0,5 - 10 Mol-% bezogen auf Tetrahydrofuran eingesetzt werden, die gewünschten vorteilhaften Ergebnisse erhält, wenn man z. B. an Stelle der im EP-A-0239787 verwendeten Bleicherden oder Zeolithen durch Säuren aktivierte und calzinierte Alummosilicate wie Kaolin, Zeolithe oder amorphe Aluminosilicate in granulierter Form als Katalysator einsetzt, und die Konzentration des Carbonsäureanhydrids oder des 1,2-Alkylenoxids im Reaktionsgemisch konstant unter 1 Gew-% hält.

Als 1,2-Alkylenoxide kommen substituierte oder unsubstituierte Alkylenoxide in Betracht. Als Substituenten seien z.B. lineare oder verzweigte Alkylgruppen mit 1 bis 6, vorzugsweise 1 bis 2 C-Atonen, Phenylreste, durch Alkyl- und/oder Alkoxygruppen mit 1 bis 2 C-Atomen oder Halogenatomen substituierte Phenyl reste oder Halogenatome, vorzugsweise Chloratome genannt. Besonders geeignete 1,2-Alkylenoxide sind 1,2-Butylenoxid, 2,3-Butylenoxid, Styroloxid, Epichlorhydrin und vorzugsweise Ethylenoxid und 1,2-Propylenoxid.

Geeignete Carbonsäureanhydride leiten sich von aliphatischen oder aromatischen Carbonsäuren mit z.B. 2-8 Kohlenstoffatomen ab. Genannt seien z. B. Essigsäureanhydrid. Buttersäureanhydrid, Acrylsäureanhydrid oder Phathalsäureanhydrid.

Telogene mit reaktivem Wasserstoff sind beispielsweise Wasser, ein- und mehrwertige Alkohole, wie Methanol, Ethanol, Propanol, Ethylenglycol, Butylenglycol, Glycerin, Neopentylglycol und Butandiol-1,4 sowie insbesondere Carbonsäuren mit 1 bis 8 Kohlenstoffen. Auch Polytetramethylenetherglycol (PTHF) kann als Verbindung mit reaktivem Wasserstoff bei der Copolymerisation verwendet werden.

Die Verbindungen mit reaktivem Wasserstoff und die Carbonsäureanhydride werden in Mengen von 5 bis 20 vorzugsweise 0.5 - 10 Mol%, bezogen auf das Tetrahydrofuran, eingesetzt.

Am einfachsten und am wirtschaftlichsten gestaltet sich das Verfahren, wenn Essigsäureanhydrid bei der Homopolymerisation oder wenn Wasser bei der Copolymerisation verwendet wird. Wasser und mehrwertige Alkohole führen zur Bildung von Polyetheralkoholen, die zwei- oder mehrfachfunktionell sein können. Da man beim Einsatz von Carbonsäuren polymere Halbester erhält, unterwirft man die Estergruppen enthaltenden Copolymeren einer an sich üblichen Verseifung. Dies gilt auch für Homopolymere mit Estergruppen. Man verfährt dabei z.B. so, daß man die Homo- oder Copolymerisate in Anwesenheit oder Abwesenheit von inerten Lösungsmitteln mit wäßrigen Alkalihydroxiden erhitzt oder besser, z.B. nach Methoden, wie sie in der US-PS 2 499 725 oder in J. Am.Chem. Soc. 70,1842, beschrieben werden, unter der katalytischen Wirkung eines Alkalialkoholates einer Umesterung mit z.B. Methanol, unterwirft.

Die erfindungsgemäß als Katalysator zu verwendende Aluminosilikate sind verbreitet und kostengünstig zu beschaffen. Aluminiumsilicat-Zeolithgemenge z.B. ist ein industriell häufig u. a. bei Crackreaktionen verwendeter Raffinerie-Katalysator. Im Vergleich zur natürlich vorkommenden Bleicherde haben diese synthetischen Aluminiumsilicate den nicht gering einzuschätzenden Vorteil, daß die katalytische Aktivität durch das Herstellungsverfahren gesteuert eingestellt werden kann. Aluminiumsilicate besitzen an der Oberfläche saure Zentren. Aktivität und Selektivität der Katalysatoren hängen sowohl von der Konzentration als auch der Stärke der sauren Zentren ab. Zur Herstellung der amorphen Aluminiumsilicate, die z.B. auch als Crackkatalysatoren großtechnisch bei der Erdölverarbeitung eingesetzt werden, wird im allgemeinen eine verdünnte Wasserglaslösung mit Schwefelsäure versetzt. Dabei bildet sich Kieselgel, dem nach bestimmter Alterungszeit Aluminiumsulfatlösung und Ammoniak zugesetzt werden. Der pH-Wert liegt dabei im schwach sauren Bereich. Das sich bildende Aluminosilicatgel wird abfiltriert, fremdionenfrei gewaschen, getrocknet und kalziniert. Dabei entstehen nach den Gleichungen

$$NH_4AlO_2 \cdot nSiO_2 \rightarrow NH_3 + HAlO_2 \cdot nSiO_2 \text{ und}$$

$$2HAlO_2 \cdot nSiO_2 \rightarrow H_2O + Al_2O_3 \cdot nSiO_2$$

Brönstedt- und Lewis-Säurezentren. Die Herstellbedingungen haben großen Einfluß auf die physikalische Struktur der Aluminosilicate. So z.B. führen höhere Silicatkonzentrationen der Wasserglaslösung, höhere Alterungstemperaturen des Kieselgels zu Katalysatoren mit größerem Porenvolumen und größerer spezifischer Oberfläche. Eine umfassende Abhandlung über diese Zusammenhänge findet sich in einer Arbeit von K. D. Ashley et al. in Industrial Engineering Chemistry (1952), 44. S. 2857-2863. Um geeignete Katalysatorformkörper für das erfindungsgemäße Verfahren herzustellen, kann man die Katalysatorpulver (amorphes Aluminosilicat und Zeolith) mischen, anteigen, zu Strangpreßlingen extrudieren oder in Kugelformmaschinen zu Kugeln von z. B. 4 mm Durchmesser verarbeiten. Es folgt dann eine Wärmebehandlung zur Festigung der Struktur, Basenaustausch mit $Al_2(SO_4)_3$ zur Entfernung von Na-Ionen gegen Al-Ionen und/oder Säurebehandlung mit z.B. Salzsäure, 4-stündiges Vortrocknen bei 140°-170°C, Fertigtrocknen und Tempern bei hoher Temperatur (400-700°C). Man erhält homogene Katalysatorperlen mit z. B. der Zusammensetzung 55% $SiO_2^-$, 45% $Al_2O_3$ und einer spezifischen Oberfläche von 150 - 200 $m^2$/g und einem Porenvolumen von etwa 0,4 $cm^3$/g. Die Patentschrift DOS 1803418 beschreibt die Herstellung solcher Katalysatoren. Der Zeolithgehalt (bevorzugt Zeolith X), kann zwischen 10 - 80, bevorzugt 20 - 60 Gew.% betragen.

Das erfindungsgemäße Verfahren wird kontinuierlich oder diskontinuierlich an festen Katalysatoren durchgeführt. Damit das Gemisch aus Tetrahydrofuran, 1,2-Alkylenoxid und der Verbindung mit aktivem Wasserstoff oder aus Tetrahydrofuran und Essigsäureanhydrid intensiv mit dem Katalysator in Berührung kommt, bewegt man entweder den Festkatalysator in den Ausgangskomponenten oder die Mischung der Reaktionskomponenten im Verhältnis zum statitisch angeordneten Festkatalysator.

Im ersten Fall verwendet man z.B. gerührte Gefäße, in denen die Katalysatorkörner suspendiert sind. Im zweiten Falle verfährt man beispielsweise so, daß man das Gemisch der Reaktionskomponenten über den festangeordneten Katalysator leitet. Die zweite Verfahrensvariante wird aus verschiedenen Gründen bevorzugt. Sie ermöglicht z.B. eine sauberere Temperaturführung und die Gewinnung eines katalysatorfreien Reaktionsgemisches.

Die Katalysatorformkörper werden in einem Reaktor z.B. durch einfaches Aufschütten fest angeordnet. Das vom Reaktionsgemisch durchströmte Katalysatorbett muß auch nach längerem Betrieb nicht erneuert werden, da die Katalysatorformkörper ihre ursprüngliche feste Form behalten und keinen Abrieberleiden. Die Katalysatoren zeichnen sich durch einen geringen Aktivitätsverlust aus und besitzen eine fast unbegrenzt lange Lebensdauer.

Als Reaktoren eignen sich für das erfindungsgemäße Verfahren z.B. säulenförmige Reaktionsgefäße, bei denen der Rohrdurchmesser etwa 10 bis 100 mm beträgt, wenn die Wärmetönung im Reaktionsgefäß abgeführt werden soll. Will man die Temperatur durch einen im äußeren Kreislauf eingebauten Wärmeaustauscher reguliern, so kann man als Reaktor auch einen Schachtofen verwenden.

Durch den Reaktor wird das Gemisch der Ausgangsstoffe z.B. mittels einer Umlaufpumpe geleitet. Dabei hält man die Konzentration des Alkylenoxids oder des Carbonsäureanhydrids im Reaktionsgemisch während der Polymerisation unter 1 Gew. %. vorteilhaft zwischen 0,1 bis 0.8 Gew. % und insbesondere bei 0,1 bis 0,5 Gew. %. Gleichzeitig sorgt man für eine im wesentlichen konstante Konzentration des Alkyloxids im Reaktionsgemisch. Unter einer im wesentlichen konstanten Konzentration des Alkylenoxids wird eine Konzentration verstanden, deren Abweichung nicht mehr als 10% vom Sollwert hinausgeht. Das Reaktionsgemisch wird so lange im Kreise gepumpt, bis der gewünschte Umsetzungsgrad erreicht ist. Die Dauer der Reaktionszeit, während der das Reaktionsgemisch über den im Reaktor angeordneten Katalysator gepumpt wird, kann bei Copolymeren in Abhängigkeit von der gewünschten copolymeren Zusammensetzung in verhältnimäßig weiten Grenzen varriert werden. Will man z.B. ein Copolymeres erhalten, das in der Endzusammensetzung aus etwa 20 Gew.% Alkylenoxid besteht, und hält man die Konzentration des Alkylenoxids im Reaktionsgemisch während der gesamten Umsetzung konstant bei 0.2 Gew. %, so erreicht man nach ca. 5 bis 10 Stunden eine Umsetzung von ca. 50 Gew. %; sofern sich Katalysatorvolumen und stündlich umgewältzte Reaktionsmischeung etwa im Verhältnis 1:1 bis 1:5 bewegen. Das Verhältnis des Gesamtvolumens der Reaktionkomponenten zum Katalysatorvolumen liegt zwischen den Werten 5:1 und 1:1. Die benötigte Reaktionszeit ist umgekehrt proportional zur angewendeten Alkylenoxidkonzentration in der Reaktionsmischung.

Die Einsatzstoffe Tetrahydrofuran und 1,2-Alkylenoxid bzw. Carbonsäureanhydrid werden zweckmäßigerweise in möglichst reiner Form eingesetzt. Dadurch wird eine lange Lebensdauer der Katalysatoren gewährleistet. Das Tetrahydrofuran kann zum Zwecke der Reinigung vor der Polymerisation mit starken Mineralsäuren, organischen Sulfonsäuren, Silikaten und vorzugsweise Bleicherden nach dem in der EP-OS 3112 beschriebenen Verfahren vorbehandelt werden. Es lassen sich verschiedene 1,2-Alkylenoxide wie auch Mischungen verschiedener Verbindungen mit aktivem Wasserstoff gleichzeitig in einem Reaktionsansatz einsetzen.

Das Molverhältnis zwischen der eingesetzten Menge an Tetrahydrofuran und der Menge an 1,2-Alkylenoxid oder Carbonsäureanhydrid liegt z.B. zwischen 50:1 und 5:1, vorzugsweise zwischen 25:1 und 10:1. Wichtig ist, daß man bei der Zugabe des 1,2-Alkylenoxids oder Carbonsäureanhydrids dafür sorgt, daß dessen Konzentration im Gemisch unter 1Gew. %, bleibt.

Es empfiehlt sich, das Molverhältnis der monomeren am Katalysator während der überwiegenden Reaktionszeit, vorzugsweise während 80-99% der Gesamtreaktionszeit, möglichst konstant zu halten. Lediglich bei einer Nachreaktionszeit kann die Konzentration an Alkylenoxid durch vollständige Abreaktion bis auf 0 fallen. Die wünschenswerte Konstanz der Alkylenoxid-Konzentration im Reaktionsgemisch erreicht man dadurch, daß der Monomerenmischung das Alkylenoxid oder Säureanhydrid in dem Maße zugeführt wird, wie sich dessen Kozentration durch Polymerisation im Reaktionsansatz verändert. Für die Copolymere gilt, daß die Menge an Alkylenoxid, die im gesamten zeitlichen Verlauf zur Polymerisation gebracht wird, in sehr breiten Grenzen schwanken kann. Copolymere, die sich zu interessanten Endprodukten verarbeiten lassen, enthalten z.B. 5 bis 50, insbesondere 10 bis 30 Gew. % Alkylenoxid. Nach Beendigung der Umsetzung ist Alkylenoxid oder Carbonsäureanhydrid wünschenswerterweise vollständig umgesetzt, während überschüssiges Tetrahydrofuran, das in Abwesenheit des Alkylenoxids oder Carbonsäureanhydrids am Katalysator nicht weiterreagiert, als Lösungsmittel für das Copolymere im Gemisch verbleibt. Die Konzentration des Polymeren im Tetrhydrofuran liegt z.B. bei 30 bis 60 Gew. %.

Die Poylmerisation am festangeordneten Katalysatorbett oder im bewegten Katalysatorbett führt man zweckmäßig im Temperaturbereich von 0 bis 70°C, vorzugsweise zwischen 30 und 60°C bei Normaldruck durch.

Nach der bevorzugten Arbeitsweise leitet man das Gemisch der Ausgangstoffe für die Polymerisation durch den Reaktor, wobei man das den Reaktor verlassende Reaktionsgemisch durch erneute Zugabe von Alkylenoxid oder Säureanhydrid auf die gewünschte und möglichst konstante Konzentration einstellt. Die Zugabe der Verbindung mit reaktivem Wassertoff erfolgt in den meisten Fällen durch eine Konzentrationseinstellung im Tetrahydrofuran zu Beginn der Reaktion. Wenn es gewünscht wird, kann die Zugabe der Verbindung mit reaktivem Wasserstoff auch laufend erfolgen. Im allgemeinen wird man aber auf diese Maßnahme verzichten. Das Reaktionsgemischfür die Copolymerisation, das laufend bei möglichst konstanter Alkylenoxid-Konzentration gehalten wird, führt man solange im Kreise über das Katalysatorbett, bis die gewünschte Menge Alkylenoxid, die später im Copolymerisat enthalten sein soll, der zuvor festgelegten Menge Tetrahydrofuran zugeführt wurde. Bei der Homopolymerisation wird je nach gewünschtem Molekulargewicht die Carbonsäureanhydridkonzentration in der Zulaufmischung eingestellt.

Im allgemeinen liegt die benötigte Reaktionszeit für einen vollständigen Umsatz zwischen 2 und 20, vorzugsweise zwischen 4 und 10 Stunden.

Aus dem Reaktionsprodukt gewinnt man das Polymere in reiner Form durch Abdampfen des nicht umgesetzten Tetrahydrofurans. Letzteres kann für eine neue Polymerisation verwendet werden.

Die Polymerisation verläuft exotherm. Deshalb sorgt man durch Kühlung des Reaktors oder des Stromes des Reaktionsgemisches, der außerhalb des Reaktors im Kreislauf gepumpt wird, für Temperaturkonstanz.

Die bei der Polymerisation erhaltenen Produkte, insbesondere solche mit Molekulargewichten von 300 bis 5000 sind für die Herstellung von Polyurethanen oder Polyestern hervorragend geeignet. Werden bei der Polymerisation als Startermoleküle Carbonsäuren oder Carbonsäureanhydride verwendet, so entstehen primär Ester, die wie oben angegeben vor der Umsetzung mit Diisocyanaten oder Dicarbonsäuren zu den Glycolen verseift werden. Die aus den Polymeren hergestellten Fertigpolymerisate besitzen ein hohes mechanisches Niveau bei guter Kalte-, Mikroben- und Verseifungsfestigkeit. Im Vergleich zum hochpolymeren Polytetramethylenetherglycol haben die Copolymere einen niedrigeren Erstarrungspunkt und eine geringere Viskosität. Sie lassen sich also ohne zusätzlichen Verflüssigungs- oder Schmelzprozeß für der Weiterverarbeitung verwenden.

Das erfindungsgemäße Verfahren hat den erheblichen Vorteil, daß bei der Polymerisation praktisch keine Nebenprodukte, insbesondere nur sehr geringe Anteile cyclischer Oligomerer gebildet werden, und daß die Reaktion bis zu einem vollständigen Umsatz des 1,2-Alkylenoxids, des Carbonsäureanhydrids und der Verbindung mit reaktivem Wasserstoff geführt werden kann. Unerwartet und mit den Erfahrungen auf dem Polymerisationsgebiet nicht ohne weiteres zu erklären, besitzen die erfindungsgemäß hergestellten Polymere eine sehr enge Molekulargewichtsverteilung, die beispielsweise für Polymerisate mit dem Molekulargewicht um 1000 bis 1500 im Bereich eines Heterogenitätsquotienten Mw/Mn von 1,2 - 1,4 liegt. Dagegen weisen die durch die bislang bekannten kontinuierlichen und diskontinuielichen Verfahren erhältlichem Polymerisate mit Molekulargewichten von 1000 bis 1500 im Durchschnitt Heterogenitätsquotienten Mw/Mn von 1,5 bis 2,5 auf.

Polymere mit enger Molekulargewichtsverteilung sind insbesondere bei der Weiterverarbeitung zu Polyurethanen oder Polyester eher geeignet, Produkte mit wertvollem mechanischen Niveau zu liefern, als Einsatzprodukte, die hinsichtlich der Molekulargewichtsverteilung sehr uneinheitlich sind. Unerwartet war auch, daß das erfindungsgemäße Verfahren Copolymerisate mit äußerst niedriger Farbzahl liefert. Dem Fachmann ist nämlich bekannt, daß Polymerisate, die man durch kationische Polymerisation erhält, meist tief gefärbt sind und erst durch zusätzliche Maßnahmen wie Hydrierung raffiniert werden müssen. Die Polymerisate weisen pro Molekül 2 Äquivalente Hydroxyl- bzw. Estergruppierung auf. Erstaunlicherweise sind auch die copolymeren Produkte fast zu 100% bifunktionell, obwohl von Alkylenoxid-Polymeren bekannt ist, daß sie meist keine strenge Bifunktionalität aufweisen. Dieses im höchsten Maße wünschenswerte Ergebnis wird u.a. durch den verwendeten Katalysator in Granulatform erreicht.

Ein wichtiger Vorzug des Verfahrens ist es, daß die Reaktionsgemische, in denen die Polymerisate in Konzentrationen von 40 bis 60 % enthalten sind, nur der Befreiung von überschüssigem Tetrahydrofuran bedürfen, um der Endanwendung, z.B. der Herstellung von Polyurethanen zugeführt werden zu können. Das zweckmäßig durch Destillation im Vakuum zu entfernende Tetrahydrofuran kann erneut, ohne daß es einer Reinigungsoperation bedarf, für die Umsetzung verwendet werden.

Die folgenden Beispiele sollen das erfindungsgemäße verfahren näher erläutern, ohne es zu begrenzen. Die genannten Teile sind Gewichtsteile, sie verhalten sich zu Volumenteilen wie Kilogramm zu Litern.

Beispiel 1

Ein wasserfreies Aluminosilicat mit der Bezeichnung Perlkat PY 115 und der Zusammensetzung 55 % $SiO_2$, 45 % $Al_2O_3$, Korngröße 3-5 mm (Hersteller Solvay Catalyst GmbH, Hannover, Germany), werden in eine Duranglas-Laborflasche der Firma Schott, Mainz gefüllt, im Wasserbad auf 50°C vorgewärmt und mit 300 g einer Mischung, die aus 91.5 Gew.% THF und 0,5 Gew.% Essigsäureanhydrid besteht, überstellt. Die dicht mit einer Polypropylenschraubkappe verschlossene Flasche wird im Wasserbad bei 50°C 10 Stundenlang langsam um die Längsachse gedreht, um die Katalysatorschüttung in leichter Bewegung zu halten. Im zeitlichen Abstand von einer Stunde werden noch 8 Portionen von 3 g Essigsäureanhydrid der Reaktionsmischung zugefügt. Durch Waschen mit 3%iger Salzsäure und Trocknen bei 550°C wurde der Katalysator zuvor in die protonierte Form überführt.

Das Reaktionsgemisch wurde danach vom Katalysator dekantiert und untersucht. Aus der Säurezahl des Reaktionsproduktes läßt sich ein mindestens 99%iger Umsatz des Essigsäureanhydrids ableiten.

Bei 150°C und 5 mbar dampft man das unumgesetzte THF vom entstandenen Polytetramethylenetherglykoldiacetat ab, das zu 56 Gew.% in der Reaktionslösung enthalten war. Die Verseifungszahl des Diesters beträgt 152.6 mg KOH/g was einem Molekulargewicht von 734 g/mol entspricht. Durch Umestern mit der gleichen Menge Methanol in Gegenwart von z. B. 0.01 Gew.% Natriummethylat erhält man daraus PTMEG mit der Hydroxylzahl 173 mg KOH/g und der Farbzahl 5 APHA. Die Säurezahl betrögt < 0.01 mgKOH/g. Das Produkt zeigt eine sehr enge Molekulargewichtsverteilung. Der Heterogenitätsquotient (Polydisperistät) $M_w/M_n$ beträgt nur 1,18 und zeigt also eine extrem enge Molekulargewichtsverteilung an. Der Gehalt an oligomeren cyclischen Ethern ist kleiner 0.01 Gew.%.

Beispiel 2

Die Polymerisation wird in der in Beispiel 1 beschriebenen Vorsuchsanordnung bei 50°C mit dem käuflichen Granulat-Katalysator Perlkat PY 115, Solvay Catalyst GmbH, Hannover, Germany, 55 Gew.% $SiO_2$, 45 Gew.% $Al_2O_3$, der aus amorphen Aluminiumsilicat und Zeolith besteht durchgeführt. Der Katalysator in Granulatform mit den Abmessungen ca. 3 mm war zuvor mit 5 Gew.%iger, wässriger Salzsäure gewaschen und bei 550°C 2 Stunden bis zur Gewichtskonstanz getrocknet worden.

Für die Polymerisation werden 9 g Essigsäureanhydrid und 300 g THF verwendet. Nach 5 Stunden Polymerisation hat Essigsäureanhydrid zu über 99% reagiert, und die Polymerenlösung enthält 53 Gew.% PTMEG-Diacetat mit der Esterzahl 61,2 (entspricht dem Molekulargewicht 1824 g/mol). Durch Hydrierung am Festbett in der Sumpffahrweise wird es in 40 Gew.%iger Methanollösung am durch Bariumoxid aktivierten KupferchromitKatalysator G22, reduziert und stabilisiert, (Hersteller: Süd-Chemie AG, München) bei 220°C und 250 bar Wasserstoff in Polytetramethylenetherglykol mit der Hydroxylzahl 64,1 (Molekulargewicht 1750g/mol) überführt. Das Polymere ist sehr einheitlich und zeigt in der GPLC-Analyse die Polydispersität $M_w/M_n = 1,5$. Die Farbzahl liegt bei 5 APHA, die Säurezahl ist kleiner 0,01 mg KOH/g.

Beispiel 3 (siehe Abbildung)

Marktgängiges technisches Tetrahydrofuran wurde nach Beispiel 1 der EP-PS 3112 gereinigt.

Der in diesem Beispiel verwendete homogene, zeolithhaltige amorphe Siliciumdioxid-Aluminiumoxid-Katalysator ist der handelsübliche Crackkatalysator der Fa. Solvay, Catalyst GmbH, Hannover, Germany mit der Bezeichnung Perlkat PY 113, Korngröße 3 - 5 mm.

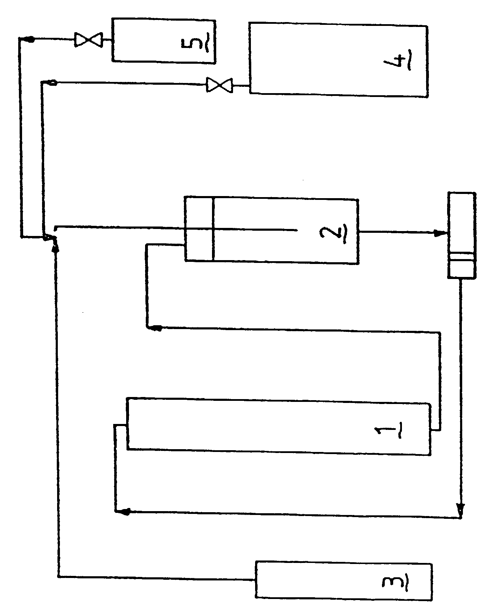

Die Polymerisation wurde in einer Apparatur durchgeführt, deren Prinzip in der Abbildung wiedergegeben ist. Der getrocknete Katalysator wurde in ein mit einem thermostatisierten Kühlmantel versehenes Reaktionsrohr (1) mit einem Inhalt von 5000 Volumenteilen und einem Verhältnis von Durchmesser zu Länge von ungefähr 1:10 eingefüllt. Das Vorratsgefäß (2) mit einem Nutzvolumen von 7000 Volumenteilen wurde mit 5000 Teilen des gereinigten Tetrahydrofurans, 43 Teilen Wasser und 10,3 Teilen Ethylenoxid beschickt. Dabei wurden Tetrahydrofuran (4), Wasser (5) und Ethylenoxid (3) den dafür vorgesehenen Vorratbehältern entnommen. Diese Mischung der Ausgangsverbindungen wurde auf das Katalysatorbett (1), dessen Temperatur auf 47 bis 49°C gehalten wurde, gegeben, Sobald das Katalysatorbett mit Frischzulauf gefüllt war, wurde im Vorratsgefäß noch einaml dieselbe Menge Frischzulauf hergestellt und diese nun fortlaufend über das Katalysatorbett geführt. Der Überlauf gelangte in das Vorratsgefäß (2) zurück. Durch kontinuierliches Eingasen von Ethylenoxid aus dem Vorratsgefäß (3) in die Zulaufmischung im Vorratsgefäß (2) wurde dafür gesorgt, daß die Ethylenoxid-Konzentration im Vorratsgefäß (2) konstant bei 0,1 Gew.% gehalten wurde. Durch die Eingabemenge von 35 Teilen Ethylenoxid in der Stunde gelang es, diese Konzentration in der Zulaufmischung aufrecht zu erhalten. Nach 9 Stunden Reaktionszeit waren 325 Teile Ethylenoxid in die Reaktionsmischung eingetragen. Man ließ das Reaktionsgemisch nun noch bei 49°C nachreagieren. Es wurde mit der Pumpenleistung von 15000 Volumenteilen/h, die während der gesamten Versuchsdauer konstant gehalten wurde, aus dem Vomsgefäß (2) im Kreise über den Katalysator (1) geführt. Danach war die Ethylenoxid-Konzentrafion in der Zulaufmischung auf 0 Gew.% abgesunken. Die insgesamt ein- und umgesetzte Ethylenoxid-Menge betrug 315 Teile.

Dem Vorratsgefäß (2) wurden durch Entleerung 5350 Teile Reaktionsmischung entnommen. Dieses erste Reaktionsgemisch wurde verworfen. Das Vorratsgefäß wurde anschließend erneut mit 5500 Teilen Frischzul auf beschickt, der aus 98.3% Tetrahydrofuran, 0,7% Wasser und 0,2% Ethylenoxid bestand. Diese Mischung wurde nun mit einer Pumpenleistung von 12000 Volumenteilen pro Stunde durch das Katalysatorbett (1) im Kreise geführt. Gleichezeitig wurden in das Reaktionsgefäß (1) 36 Teile Ethylenoxid stündlich eingegast, wodurch es gelang, die Konzentration an Ethylenoxid im Vorratsgefäß bei 0,1 % zu halten. Nach 9 Stunden wurde die Ethylenoxid-Zufuhr unterbrochen. Das Reaktionsgemisch wurde 4 Stunden mit einer stündlichen Leistung von 12000 Volumenteilen pro Stunde im Kreise gepumpt. Das Reaktionsprodukt im Vorratsgefäß (2) wurde abgelassen und das Vorratsgefäß in der oben beschriebenen Weise erneut mit der Mischung aus Tetrahydrofuran, Wasser und Ethylenoxid beschickt. Dann wurde die Polymerisation wie oben beschrieben 9 Stunden lang bei weiteren 4 Stunden für die Nachbehandlung ausgeführt. Das dabei erthaltene Reaktionsgemisch unterschied sich kaum noch von den Austrägen, die in 100 weiteren Polymerisationsansätzen dieser Art erhalten wurden.

Für die Isolierung des Copolymeren wurde das farblose Reaktionsgemisch (Farbzahl < 5 APHA) zunächst unter Normaldruck und dann im Vakuum bei 1 mbar bis 200°C im Filmverdampfer eingedampft. Das erhaltene Destillat bestand zu 98% aus reinem Tetrahydrofuran und zu 0,8 % aus niedermolekularen Copolymeren mit einem durchschnittlichen Molekulargewicht von ca. 250. Aus der bei der Eindampfung erhaltenen Menge des Copolymeren errechnet sich ein 45%-iger Umsatz des eingestzten Tetrahydrofurans. Eingesetztes Ethylenoxid war vollständig umgesetzt worden und befand sich quantitativ mit einem Anteil von ca. 15 Gew.% im erhaltenen Copolymerisat. Aus der Hydroxylzahl des Copolymeren errechnet sich dessen Molekulargewicht zu 1260. Die durch Gelpermeationschromatographie bestimmte Dispersität des Colpolymeren war Mn/Mw = 1,25, die Farbzahl war kleiner 5 APHA und die Säurezahl lag unter der Nachweisbarkeitsgrenze von 0.01 mg KOH/g. Cyclische oligomere Ether waren im Reaktionsprodukt nicht nachweisbar.

Beispiel 4

In ein thermostatiertes und gerührtes Reaktionsvolumen wurden 195 Teile granulierter (Korngröße 3 mm), käuflicher SiO$_2$ - Al$_2$O$_3$ Katalysator (Perlkat PY 115, Solvay Catalyst GmbH, Hannover) gefüllt. Der Katalysator war zuvor mit 7 Gew-% iger wässriger Salzsäure getränkt und bei 650°C 2 Stunden bis zur Gewichtskonstanz getrocknet worden. Dann wurde das Reaktionsgefäß mit einer Mischung aus 950 Teilen Tetrahydrofuran und 40 Teilen Ameisensäure beschickt. Unter Rühren wurde das Gemisch dann gleichmäßig während 5 Stunden mit 10 Teilen Propylenoxid pro Stunde versetzt. Dadurch wurde die Propylenoxid-Konzentration im Umsetzungsgemisch konstant bei 0,08 Gew.% gehalten. Die Reaktionstemperatur betrug 50°C: Nach Zugabe der gesamten Propylenoxid-Menge wurde noch 4 Stunden bei Reaktionstemperatur gerührt. Durch Filtration wurde die erhaltene Lösung des Copolymeren vom Katalysator getrennt. Das Filtrat war frei von Propylenoxid und bestand aus 43% Copolymeren und 57% nicht umgesetztem Tetrahydrofuran; wie es durch Eindampfen bei Normaldruck und im Vakuum festgestellt wurde. Das lösungsmittelfreie Copolymere hatte eine Verseifungszahl von 37 mg KOH und eine Hydroxylzahl von 13 mg KOH/g. Das Produkt enthielt weniger als 0,5% cyclische oligomere Ether. Das esterhaltige Polymerisat wurde nun mit der gleichen Menge Methanol und 10 Teilen Calciumhydroxid versetzt und destillativ an einer Kolonne mit 20 theoretischen Böden unter Abdestillieren des Methylfomiats bei Normaldruck bei 32°C zum Glycol umgeestert. Nach vollständiger Umesterung wurde das als Umesterungskatalysator verwendete Calciumhydroxid abfiltriert und die methanolische Lösung des Copolymerisats zunächst bei Normaldruck später im Vakuum am Filmverdampfer vollständig eingedampft. Das erhaltene Polymerisat war esterfreies, reines Glykol mit einer OH-Zahl von 51 mg KOH/g, was einem Molekulargewicht von 2210 entspricht. Das $^{13}$CNMR-Spektrum zeigte, daß das Copolymere aus ca. 10% Propylenoxid und 90% Tetrahydrofuran entstanden war. Die Dispersity des Produktes Mw/Mn lag bei 1,3. Die Farbzahl lag unter 5 APHA und die Säurezahl bei unter 0.01mg KOH/g.

Ein fast gleiches Copolymerisat erhält man, wenn an Stelle des Katalysators Perlkat PY 115 5 mm Perlen aus protonisiertem und bei 650°C calciniertem Kaolin als Katalysator verwendet werden.

**Patentansprüche**

1. Verfahren zur diskontinuierlichen oder kontinuierlichen Herstellung von Polytetramethyletherglykoldiestem oder Polyoxibutylenpolyoxiglykolen durch Homopolymerisation von Tetrahydrofuran oder durch Copolymerisation von Tetrahydrofuran mit 1,2-Alkylenoxiden in Gegenwart von Carbonsäureanhydriden oder Verbindungen mit reaktivem Wasserstoff, die in Mengen von 0,1 bis 50 Mol-% bezogen auf das Tetrahydrofuran, eingesetzt werden, wobei die Polymerisation am protonisierten und calcinierten Aluminosilicat-Katalysator, der aus Kaolin, amorphem Aluminosilicat oder einem Gemisch von amorphem Aluminiumsilicat und Zeolith besteht, durchgeführt wird, und man gebenenfalls Estergruppen enthaltende Polymere auf die übliche Weise verseift, dadurch gekennzeichnet, daß man 1,2-Alkylenoxid oder Carbonsäureanhydrid dem Reaktionsgemisch so zuleitet, daß deren Konzentration dann während der Polymerisation im wesentlichen konstant unter 1-Gew.% gehalten wird.

2. Verfahren nach Anspruch 1 dadurch gekennzeichnet, daß am Festbettkatalysator, der aus Formkörpern mit einem mittleren Durchmesser von 0,5 bis 10, vorzugsweise 1 bis 8 mm besteht, polymerisiert wird.

3. Verfahren nach Anspruch 1 dadurch gekennzeichnet, daß man als 1,2 Alkylenoxid Ethylenoxid und/oder 1,2-Propylenoxid verwendet.

4. Verfahren nach Anspruch 1 dadurch gekennzeichnet, daß man als Säureanhydrid Essigsäureanhydrid einsetzt.

5. Verfahren nach Anspruch 1 dadurch gekennzeichnet, daß man als Verbindung mit reaktivem Wasserstoff Wasser verwendet.

6. Verfahren nach Anspruch 1 dadurch gekennzeichnet, daß man als Verbindung mit reaktivem Wasserstofff eine Carbonsäure mit 1 bis 8 C-Atomen verwendet..

7. Verfahren nach Anspruch 1 dadurch gekennzeichnet, daß man das Molverhältnis des eingesetzten Tetrahydrofurans zur Gesamtmenge des in die Reaktion eingebrachten 1,2-Alkylenoxids oder Carbonsäureanhydrids zwischen 30:1 bis 5:1 hält.

8. Verfahren nach Anspruch 1 dadurch gekennzeichnet, daß die Polymerisation bei einer Reaktionstemperatur von 0 bis 70°C unter Normaldruck durchgeführt wird.

## Claims

1. A process for the discontinuous or continuous production of polytetramethylene ether glycol diesters or polyoxybutylene polyoxyglycols by means of homopolymerizing tetrahydrofuran or copolymerizing tetrahydrofuran with 1,2-alkylene oxides in the presence of carboxylic acid anhydrides or compounds with reactive hydrogen, which are used in quantities of 0.1 to 50 mol % relative to the tetrahydrofuran, the polymerization being carried out on protonated and calcined aluminium silicate catalyst consisting of kaolin, amorphous aluminium silicate or a mixture of amorphous aluminium silicate and zeolite, and optionally, polymers containing ester groups being saponified according to the art, characterized in that 1,2-alkylene oxide or carboxylic acid anhydride is supplied to the reaction mixture such that its concentration therein is kept essentially constant at a level below 1 per cent by weight throughout the polymerization.

2. The process as claimed in claim 1 characterized in that the polymerization is carried out on a fixed-bed catalyst which consists of molded particles having an average diameter of 0.5 to 10, preferably 1 to 8 mm.

3. The process as claimed in claim 1, characterized in that ethylene oxide and/or 1,2-propylene oxide is used as 1,2-alkylene oxide.

4. The process as claimed in claim 1, characterized in that acetic anhydride is used as carboxylic acid anhydride.

5. The process as claimed in claim 1, characterized in that water is used as the compound containing reactive hydrogen.

6. The process as claimed in claim 1, characterized in that a carboxylic acid with 1 to 8 carbon atoms is used as the compound containing reactive hydrogen.

7. The process according to claim 1, characterized in that the molar ratio of the tetrahydrofuran employed to the total amount of 1,2-alkylene oxide or of carboxylic acid anhydride introduced into the reaction is kept between 30:1 and 5:1.

8. The process as claimed in claim 1, characterized in that the polymerization is carried out under standard pressure at a reaction temperature of 0 to 70°C.

## Revendications

1. Procédé de préparation par charges successives ou en continu de diesters de poly(tétraméthylène-éther)glycols ou de polyoxybutylènepolyoxyglycols par homopolymérisation de tétrahydrofurane ou par copolymérisation de tétrahydrofurane avec des oxydes de 1,2-alkylène en présence d'anhydrides d'acides carboxyliques ou de composés à hydrogène réactif, qui sont utilisés en des quantités de 0,1 à 50 % en mol par rapport au tétrahydrofurane, la polymérisation s'effectuant sur un catalyseur à base d'aluminosilicate protoné et calciné, constitué de kaolin, d'un aluminosilicate amorphe ou d'un mélange d'un silicate d'aluminium amorphe et d'une zéolite, et éventuellement saponification de manière classique des polymères contenant des groupes ester, caractérisé en ce que l'on ajoute l'oxyde de 1,2-alkylène ou l'anhydride d'acide carboxylique au mélange réactionnel de manière que leur concentration y soit maintenue essentiellement constante au-dessous de 1 % en masse pendant la polymérisation.

2. Procédé selon la revendication 1, caractérisé en ce que l'on effectue la polymérisation sur un catalyseur en lit fixe, qui est constitué de corps moulés ayant un diamètre moyen de 0,5 à 10, de préférence de 1 à 8 mm.

3. Procédé selon la revendication 1, caractérisé en ce que l'on utilise de l'oxyde d'éthylène et/ou de l'oxyde de 1,2-propylène comme oxyde de 1,2-alkylène.

4. Procédé selon la revendication 1, caractérisé en ce que l'on utilise de l'anhydride acétique comme anhydride d'acide.

5. Procédé selon la revendication 1, caractérisé en ce que l'on utilise de l'eau comme composé à hydrogène réactif.

6. Procédé selon la revendication 1, caractérisé en ce que l'on utilise un acide carboxylique de 1 à 8 atomes de carbone comme composé à hydrogène réactif.

7. Procédé selon la revendication 1, caractérisé en ce que l'on maintient le rapport molaire du tétrahydrofurane utilisé à la quantité totale d'oxyde de 1,2-alkylène ou d'anhydride d'acide carboxylique introduit dans la réaction entre 30:1 et 5:1.

8. Procédé selon la revendication 1, caractérisé en ce que la polymérisation s'effectue à une température de réaction de 0 à 70°C sous la pression normale.